# EUROPEAN PATENT APPLICATION

(11) **EP 3 832 496 A1**
(43) Date of publication of application: **09.06.2021**
(21) Application number: 20211656.2
(22) Date of filing: 03.12.2020
(51) Int. Cl.: G06F 16/957, G06F 16/2453, G06F 16/33

(54) **IMPROVED PROXY SERVER CACHING OF DATABASE CONTENT**

(30) Priority: 08.12.2019 US 201916706765
(71) Applicant: Akamai Technologies, Inc., Cambridge, MA 02142 (US)
(72) Inventor: FLACK, Martin T., Cambridge, MA 02142 (US); STEINER, Moritz, Cambridge, MA 02142 (US)
(74) Representative: TLIP Limited

(57) **Abstract**

Improved caching of database content can be accomplished by over-caching. Assume a client request contains or gives rise to the need to execute a database query. The parameters of such a query can be expanded before issuing the expanded query (e.g, in a forward request of an Internet proxy operation) to an origin database. This over-caching approach causes the origin to return more information (e.g, more rows or columns) than is actually necessary to respond to the instant client query. However, the extra information can be used to service subsequent client requests without the need for again going forward to origin. The extent of the query expansion can be controlled based on a variety of factors, such as cache pressure, origin database inter-write times, and recent query history, for example. The teachings hereof are useful in delivering web pages, web applications, and web APIs, among other things.

## Description

### BACKGROUND

### Technical Field

This application generally relates to the caching of database content to support web page, web application, web API or other kinds of content delivery over computer networks.

### Brief Description of the Related Art

Content delivery networks (CDNs) typically use proxy servers to improve the delivery of websites, web applications, and other online content such as streaming media. A CDN usually has many proxy servers distributed across the Internet, e.g., located in end user access networks, peering points, or otherwise. An end user client desiring content under a domain being handled by the CDN is directed to a given proxy server in the CDN. This may be accomplished using a DNS-based request routing mechanism, in which the CDN's domain name service returns an IP address of a proxy server in response to a name lookup for the domain, as known in the art.

Due to the aforementioned request routing mechanism, the end-user client makes a content request for a desired object to the proxy server (e.g., using HTTP or other application layer protocol that may be used to facilitate an API). (Such a proxy server is sometimes referred to as an "edge server" for example when deployed in an end-user access or "edge" network.) The proxy server maintains a cache of content (also referred to, equivalently, as an 'object' cache). The proxy server searches this cache for the content. If it locates an object and the object is not expired and otherwise valid to serve (cache hit), the end-user request can be served out of cache. If not (cache miss), the proxy server may need to fetch the object from another server in the CDN (e.g., using a cache hierarchy model, as described in US Patent No. 7,603,439), or from an origin server associated with the content provider that is associated with the domain of the requested content. In this way the content provider can make its website, web application, enterprise tool, or other online property available to end-users via the CDN in an improved fashion.

To fetch content from origin, the proxy server issues what is often referred to as a 'forward request' to the origin. After retrieving the content from origin, it can be served to the end-user client, and potentially cached for some time period by the proxy (e.g., as indicated by a time to live or TTL) to serve future requests. Fetching content from the origin infrastructure is undesirable, because it increases response time for the end user, increases network traffic, and increases load (decreases offload) on the origin infrastructure. Hence it is desirable to increase the cache hit ratio achieved by a proxy cache -- or more generally, the cache hit ratio achieved by a caching system with many proxy caches. Of course, cache space is limited, as storage devices are limited and have a cost. So there is an inherent tradeoff between caching more content to improve cache-hit ratio, and the cost of such caching.

Typical kinds of content that can be stored in a proxy's cache include, images, video segments, scripts, markup language documents, JSON objects, and other things. Cached objects may also include content fetched from an origin database, such as product catalog, shipping records, inventory status, flight records, or any other kind of record. Systems and methods for managing database content in a cache, and for invalidating such content on-demand, are described in US Patent Nos. 9,648,125; 9,807,190; 9,813,515; 9,641,640; and 10,063,652, the teachings of all of which are hereby incorporated by reference in their entireties.

US Patent Nos 7,200,681, the teachings of which are hereby incorporated by reference in their entireties, describes among other things an edge server (which is or can be a proxy server) that caches data components, including XML files and JDBC, stating for example "data components on the edge server primarily live as XML files, although for optimization purpose native database formats may be supported. There are two primary ways of using data components on the edge: caching the full XML file on the edge, and then using XML Query or some other interface to query the XML file; and submitting queries over SOAP or some other native interface like JDBC to the database running at the origin. In both cases, query results preferably can be cached on the edge. The query string is then stored as a part of the cache key", at col. 8; FIG. 6D. US Patent No. 7,127,713, the teachings of which are hereby incorporated by reference in their entirety, describes among other things an edge server (which is or can be a proxy server) caching data and the results of queries. See e.g., cols. 20-21, where it describes, for example, "Caching and Using XML Data", including how "an XML Query implementation can be used to retrieve only the relevant records from the cached XML." Also described at cols. 20-21 is "Using JDBC from the Edge Server", including caching common SQL queries or caching a large data set and allowing an application on the edge to read only the relevant data, which reduces the load on the database and minimizes the latency caused by inter-tier communication. It is stated that "one technique is to use a ResultsSetsObject, to minimize the need for JDBC calls. This approach creates a single large object with the contents of the database. This is done with an expectation that another request will use results from this expanded set. If another servlet makes the same requests, the same object will be returned. Results-set caching classes can be used to traverses and access the retrieved data." JDBC provides performance hints like setting the number of rows that should be fetched from the database each time new rows are needed, called the fetch size, see section 5.1.9, "ResultSet", at www<dot>cs<dot>mun<dot>ca/java-api-1. 5/guide/j dbc/getstart/resultset. html.

As web pages, web applications, and the like, have become connected to an increasing variety of computer platforms and their databases, the need to efficiently cache database content has grown too. While the techniques above are useful, there remains a need to improve the efficiency of caching database content. The teachings hereof address this need by providing techniques to cache database content and to manage that cached content. The teachings hereof apply broadly to a wide range of database types and virtually any kind of database record.

More information about CDN technologies, including examples of request routing mechanisms using DNS and otherwise, as well as proxy server technologies, can be found in the following documents, the teachings of which are hereby incorporated by reference in their entireties: US Patent Nos. 6,108,703; 7,293,093; 7,096,263; 7,096,266; 7,484,002; 7,523,181; 7,574,499; 7,240,100; 7,603,439; 7,725,602; 7,716,367; 7,996,531; 7,925,713; 7,058,706; 7,251,688; 7,274,658; 7,912,978; 8,195,831.

The teachings presented herein improve the functioning of a computer system itself, improving the caching function in an individual server as well as that of a larger distributed system comprised of many such servers. Those skilled in the art will understand these and other improvements from the teachings hereof.

### BRIEF DESCRIPTION OF THE DRAWINGS

The invention will be more fully understood from the following detailed description taken in conjunction with the accompanying drawings, in which:
FIG. 1 is a block diagram illustrating a proxy server that caches database content pulled from an origin database, in accordance with one embodiment of the teachings hereof; and,
FIG. 2 is a block diagram illustrating hardware in a computer system that may be used to implement the teachings hereof.

Numerical labels are provided in some FIGURES solely to assist in identifying components being described in the text; no significance should be attributed to the numbering unless explicitly stated otherwise.

### DETAILED DESCRIPTION

The following description sets forth embodiments of the invention to provide an overall understanding of the principles of the structure, function, manufacture, and use of the methods and apparatus disclosed herein. The systems, methods and apparatus described in this application and illustrated in the accompanying drawings are non-limiting examples; the claims alone define the scope of protection that is sought. The features described or illustrated in connection with one exemplary embodiment may be combined with the features of other embodiments. Such modifications and variations are intended to be included within the scope of the present invention. All patents, patent application publications, other publications, and references cited anywhere in this document are expressly incorporated herein by reference in their entirety, and for all purposes. The term "e.g." used throughout is used as an abbreviation for the non-limiting phrase "for example."

The teachings hereof may be realized in a variety of systems, methods, apparatus, and non-transitory computer-readable media. It should also be noted that the allocation of functions to particular machines is not limiting, as the functions recited herein may be combined or split amongst different hosts in a variety of ways.

Any reference to advantages or benefits refer to potential advantages and benefits that may be obtained through practice of the teachings hereof. It is not necessary to obtain such advantages and benefits in order to practice the teachings hereof.

Basic familiarity with well-known web page, streaming, and networking technologies and terms, such as HTML, URL, XML, AJAX, CSS, GraphQL, HTTP versions 1.1 and 2, HTTP over QUIC, MQTT, TCP/IP, and UDP, is assumed. Likewise, basic familiarity with well-known database technologies and terms, such as relational databases (RDBMS), SQL databases and queries, NoSQL databases and/or key-value approaches, is assumed.

All references to HTTP should be interpreted to include an embodiment using encryption (HTTP/S), such as when TLS secured connections are established. The terms "client" and "client device" are used herein to refer to hardware in combination with software (e.g., a browser or player application). While context may indicate the hardware or the software exclusively, should such distinction be appropriate, the teachings hereof can be implemented in any combination of hardware and software. Hardware may be actual or virtualized.

### Overview

Web applications, API-based web services, and other online services often employ a database at origin. One paradigm for such a database is a "key-value" (KV) approach, which can be considered a variant of NoSQL. The KV approach stores one string, number, or binary value for one key, possibly with a time-to-live (TTL). Another paradigm is a tabular-based database, storing tables, as in some advanced KV implementations, or as in a relational database management system (RDBMS). Some SQL or SQL-esque query capability is typically provided, but the range of features varies widely. Such a system may provide transactions or relations for query building, and be modeled as 'eventually-consistent' in order to facilitate usage at scale on the Internet. Regardless of paradigm, the availability of HTTP(s) request/response as an interface protocol is typical. The interface protocol is provided directly by the database or by a service allowing access to the database in a controlled manner, although the teachings hereof are not limited to any particular interface protocol, or indeed to any particular kind of database. The origin database may be delivered via a database service with infrastructure that replicates, caches, distributes or otherwise scales the delivery of the database contents from a given point on the Internet. References to origin or origin database in this document should be understood to potentially encompass such a database service.

When a proxy server receives a client request that requires information from an origin database, the proxy server can construct a database query to fetch the requisite information from the database in a 'forward request' operation. The response from the origin database can be cached by the proxy server. Note that a client request might (i) explicitly contain a request for database content, that is, it could explicitly contain a particular database query (although it may need to be converted in format from the HTTP carrier to a format suitable for querying the database, e.g., by extracting parameters from URL parameters, and the like); in other cases (ii) a client might request a given web page or other content that requires or causes the proxy server (e.g. by execution of some edge logic, including without limitation configuration or edge compute logic) to determine that it needs certain information from the database to be able to construct a response for the client. In this latter case, the client's request is determined to inherently require the use of database information to construct the response, so the proxy server might need to generate the database query itself, as opposed to generating it by simply extracting query information from the client request.

Two client requests may lead to two database queries that retrieve almost the same information from the same origin database. Consider a tabular database with rows and columns. Two similar queries may result in completely overlapping data sets from the database. For example, a query for all columns for rows 1-10 may be processed and cached for query A, followed by a query B for the same columns but only calling for rows 1-5 of those columns. Query B may not be recognized as any type of cache hit, but actually it could be served from data contained (and cached) in the response to query A. It is also possible that, two similar queries may result in partially overlapping data sets from the database. For example, rows 1-4 returned for query A, and rows 2-5 returned for query B. Again, a naive proxy server will cache those result sets separately, not understanding the semantics.

To address this issue and improve the caching and delivery of database content and other content based thereon, in one embodiment, a proxy server can implement an over-caching function. This over-caching function causes the proxy server to fetch from origin more data than necessary to respond to the client's request.

To implement over-caching for a tabular database, a proxy server can apply the following steps (a) through (f), in one embodiment:
(a) Receive a SELECT clause in a client request, or generate an initial SELECT clause in response to the client request. The generation of a SELECT clause may be performed in response to a client request that inherently requires information from a database; it could be triggered by the proxy server seeing a pattern in the client query such as a URL path of the form /table/field/value or of the form /table?field=value, recognizing this pattern (per a configuration) and then converting the string to a SELECT clause in accord with configured logic.
(b) Expand the aforementioned SELECT clause (or a SELECT-clause-like portion, as of which the URI, or a portion thereof, may function) to add additional column names (not mentioned in the original query) of which the proxy is aware (by configuration or discovery from prior queries) that may, or would likely be, requested by other queries in the future. Alternatively, the proxy can expand the SELECT clause using an asterisk ('*') or similar recognized syntax to request all available columns. In some cases, such as where a table contains a very large number (e.g., hundreds) of columns, the proxy server may decide to limit expansion, e.g., by adding only columns that meet some criteria, such as a popularity metric determined from past queries, or that have a defined or learned relationship or similarity to the column names mentioned in the query, or by configuration.
(c) Canonicalize the order of elements in the expanded query that can be reordered without affecting results, such as the order of SELECT-clause constituents, and the order of WHERE-clause constituents (to the extent possible without interfering with boolean operators), at least for the purposes of cache-key construction for cache-hit checking.
(d) Employ a "row order stability strategy", which can entail:
   (i) assume the database service always provides row order stability even in the absence of literal order instructions. The term 'row order stability' means that a query lacking an ORDER BY clause or similar articulation when executed repeatedly will yield the results in the same order each time; the resultant order might be either by original insertion order, or current disk order, or alphabetical by first column, or some similar function; hence, row order stability can be contrasted with the results being randomly ordered or having the order change sometimes); or
   (ii) fix a missing ORDER BY clause, or similar portion, if there is no known sort order stability from the database service, by adding an ORDER BY clause naming either the first column requested, a configured column name per single table if the FROM clause is a single table; or a configured mechanism to generate a column name(s) for a table such as appending " id" to the table name to select a predictably-named primary key.
(e) Generate a name for the table that will be returned by the expanded query, by employing a "table name strategy" from one of:
   (i) create a virtual table name by, e.g., concatenating or hashing the entire FROM clause, and if present any JOIN, WHERE, ORDER BY, GROUP BY, and HAVING clauses, or similar portions. This virtual table name frees the proxy server from needing to understand the details of the database system with regard to cell (a cell is one row and one column intersection holding a value) value matching (e.g., the operation of WHERE and HAVING) or to perform resorting proxy-side (the operation of ORDER BY), or to disambiguate columns that came from different tables (e.g. the operation of FROM, JOIN, and certain styles of WHERE constituent relationship expressions; and the application of SELECT aliases in HAVING);
   (ii) same as above but leaving any ORDER BY clause, or similar portion, out of consideration for the virtual table name;
   (iii) treat only the entire FROM clause as a "virtual table name" without considering the other clauses (which likely renders the proxy unable to provide treatment to queries that contain those other clauses, resulting in them always being passed-through);
   The choices of (ii) and (iii) in table name strategy above will require more logic in the proxy, approaching that of the origin database engine, to such an extent that a database query engine may be necessary to include within the proxy server to accomplish the desired features below, and serving responses from cache to the client will take more processing time. Choice (i) makes the proxy far more agnostic to the intricacies of the database query engine, and its grammar, at the cost of cache entry proliferation. However, any approach may be taken.
   The virtual table name serves as an abstraction for a SQL VIEW-like portion of the origin database table that the expanded query will return. That portion of the table can then be treated independently of the rest of the table. It can be used in a variety of ways, e.g., in unionizing queries (described later in this document), and/or as an index into cache. In the latter case, the virtual table name can function as an index pointing to the cache keys that reference the cache location of the data returned by an expanded query to which the virtual table name applies. As described below, that data may be stored in one or more slabs (meaning that multiple cache keys may be present).
(f) If a LIMIT clause is present, handle pagination in terms of the LIMIT and OFFSET clauses, or similar portions, by normalizing both to a containing 'slab' which is a set of rows and columns (as potentially expanded to more available columns as described above), where each slab has the same number of rows as the other slabs for that table and the slabs are logically consecutive in the run of rows, e.g. the first slab is rows 1-100, the second slab is rows 101-200, the third slab is rows 201-300, and so on; normalizing the LIMIT and OFFSET clauses means changing the numbers higher or lower to match logical slab boundaries in such a way as to return equal or more rows in the slab; if an expanded query crosses slab boundaries by the nature of the LIMIT and OFFSET clauses then multiple queries to the origin or database service will be necessary (to fetch multiple slabs), or the query can be excluded from treatment entirely.
(g) For queries that do not contain pagination clauses such as LIMIT ("LIMIT-less queries"), where the implied (or explicit) instruction is to return all results, the system may select a "pagination strategy" of serving from (or requesting) the first slab, then subsequent slabs as necessary to reach the end of the rows, with a configured 'sanity' maximum, which if hit, will cause either the original query to be sent to the proxy server or a query for the balance of the rows (using OFFSET) in order to complete the pending client request. Note that in HTTP/2, or when using multiple connections to the database server, the proxy server need not serially request one slab and then wait for it before requesting the next slab; instead, the proxy server may rapidly request a set of slabs, and allow all the results to come back at the same time, further allowing any overrun in request range to simply result in an error from the database service, thus discovering the number of rows available. An entirely different strategy to handle LIMIT-less queries is to pass them to the database service and then as results are returned, divide runs of rows into slabs at the proxy server, and cache them as slabs as if they had been requested individually.

As an example: assume that a client sends a request to the proxy server that contains (after conventional parsing and/or format conversion) the following query:
SELECT title, price FROM catalog ORDER by PRICE LIMIT 3

To expand this query, the features selected are relaxed, as well as the limit, resulting in the following expanded query:
SELECT * FROM catalog ORDER by PRICE LIMIT 100;

The above subset of the table, which is a 'slab' as described above, is cached by the proxy server. The virtual table name for this expanded query using, e.g., approach (e)(i), would be the concatenation of the FROM and ORDER BY clauses, that is:
"FROM catalog_ORDER-BY PRICE", or a hash thereof. The proxy server can answer the original query from the cached slab. In addition, the proxy server can use this cached slab to satisfy subsequent queries. For example, a subsequent client query of:
SELECT title, color FROM catalog ORDER BY price LIMIT 10 can be answered directly from the proxy server's cache, without needing to go forward to the origin's database layer . As another example, a subsequent client query of:
SELECT title, color FROM catalog ORDER BY price LIMIT 10 OFFSET 10
for the 'next page' of data can also be answered by the cached slab. If a client request involves many rows that are more than one slab-worth, the proxy server will divide (internally) the request into the standardized size and request multiple slabs, covering the desired range. Again, and as those skilled in the art will understand, the above is merely an example for illustrative purposes.

The HTTP responses cached as slabs can be formatted in JSON, CSV, or a similar API-related format. The proxy server properly parses and serializes the format(s) involved, including in a streaming manner, such that from a cached slab the proxy may elide the data irrelevant to the initial client request but retain the data relevant to that client request, before serving it to the client. The derivative response formed from the slab may itself be cached to avoid this parsing work for repeated identical requests. For example, using a slab size of 6 rows (small, but easier here for purposes of example), and a configured column expansion of including at least the fields 'id', 'title', 'price', and 'color', the message flow may look like the following:
Client requests from proxy server:
   SELECT title, price FROM catalog ORDER BY price LIMIT 3
Proxy server requests the following slab from database service (e.g., at origin):
   SELECT id, title, price, color FROM catalog ORDER BY price LIMIT 6
Database service returns the following as HTTP payload in the response to the proxy server:
   [{id: 4, title: "Product 4", price: 19.99, color: "black/gold"},
   {id: 2, title: "Product 2", price: 29.99, color: "red"},
   {id: 5, title: "Product 5", price: 58.49, color: "white"},
   {id: 1, title: "Product 1", price: 60.99, color: "white"},
   {id: 3, title: "Product 3", price: 82.49, color: "white/gold"},
   {id: 6, title: "Product 6", price: 99.99, color: "blue"}]

The proxy server caches the entire response, but then applies the parameters of the client query to this payload to prepare a response for the client; namely, it interprets the JSON array elements as query result rows, with each object being a result row with identified field names, of which the field names mentioned in the client query should be retained (title and price), and the others elided, preserving valid JSON formatting, and stopping after three objects to obey the limit (LIMIT 3).

The proxy server returns the following as HTTP payload in the response to the client:
[{title: "Product 4", price: 19.99},
{title: "Product 2", price: 29.99},
{title: "Product 5", price: 58.49}]

The proxy server was responsible for transforming the JSON it received into the JSON it served, using its own capabilities or by delegating to a utility, daemon, CGI program, ICAP service, or web service.

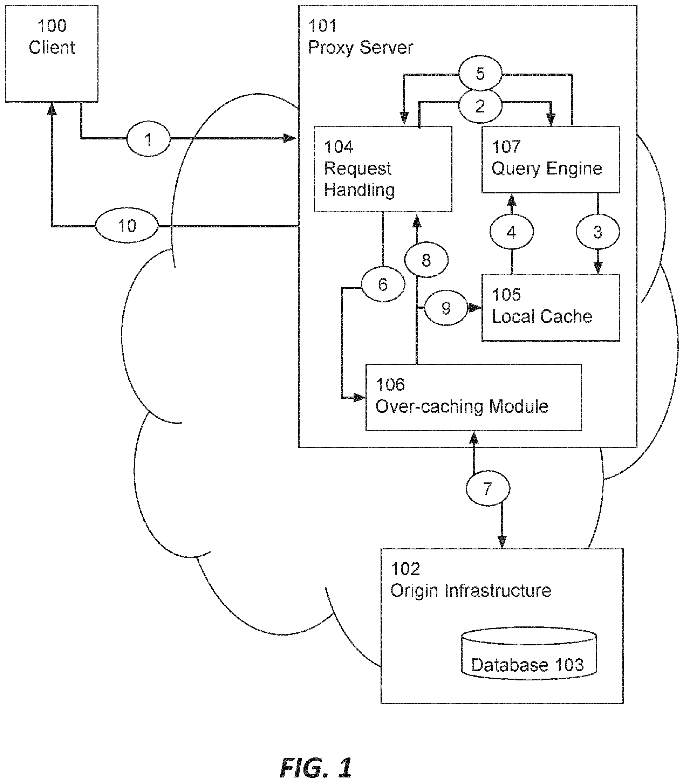

FIG. 1 provides an illustration of the components of the proxy server that can perform the over-caching and other processes described above. Summarizing with reference to FIG. 1, upon a proxy server 101 receiving a database query from a client 100 or a request from a client that can be converted to a query, or gives rise to a need for a query (shown as message (1)), the proxy server's request handling process 104 can attempt to locate the cache entry for the applicable database query in a local cache 105. This can be done, e.g. using known techniques such as applying a hash function to a URL, of portion thereof, at which the database is reachable to arrive at a cache handle. To do this, the proxy server 100 can run a query engine (e.g, a SQL engine) 107 and using the cache handle the engine can determine if the currently stored data in the cache entry (that is, a cached portion of the database) is sufficient to answer the query. Referring to FIG. 1, the request handling process 104 issues a request to the query engine 107 to examine a particular cache entry or entries (holding the table, i.e., the slabs) at message (2), the query engine creates a suitable database lookup targeting the cache entry at message (3), and the result is returned in messages (4), and then (5). A virtual table name index may be used in addition to other standard indexing techniques to speed up cache lookups.

If the cached entry does have sufficient data, the applicable portions of the cache entry (e.g, the rows and columns) are extracted; the request handling process 204 uses it to serve the client a message (10).

If the cached entry does not have sufficient data, a database query is formulated to send to the origin infrastructure 102 (or simply "origin 102" for short), with over-caching applied so that more of the database 103 than strictly necessary to answer the instant query is fetched from origin 102. In the illustrated embodiment, the requesting handling process 104 relies on a separate over-caching module 106 to intake the query that is actually received from the client, from the request handling process 104, at message (6), canonicalize and expand it for over-caching. The expanded query is sent to the origin 102 and response with the slab received at message exchange indicated by (7). As mentioned above, the over-caching module 106 can be built into the back-end function of a proxy server. However, a wide variety of implementation approaches are possible (e.g., daemon, web service, etc., as mentioned earlier).

Continuing with the flow shown in FIG. 1, once the over-caching module 106 receives the responsive data set from the origin 102, it can extract and send the subset of data that is actually needed to serve the client 100 to the request handling process 104, at message (8), while also storing the expanded content (slab or slabs) in the local cache at message (9), for future use in serving other client requests. The request handling process 104 then uses the data to respond to the client at message 10, e.g., as was illustrated in the last example.

Of course, as those skilled in the art will understand, some or all of this functionality could also be built into the requesting handling process 104, or in any other of a wide variety of ways. It should also be noted that the cache 105 need not be local to the proxy server 101. The relevant cache could be any cache that the proxy server has access to, e.g., in another server, or cache tier, a metro-area cache, or otherwise.

### Controlling the Degree of Over-Caching

Given that cache space is limited, and that fetching more bytes takes more time on the wire, it may be desirable to over-cache in some circumstances, but not others. Further, in some circumstances a large degree of 'extra' caching may be desirable -- e.g., calling for widely expanding the query parameters -- while in other cases a relatively small degree of overcaching may be warranted. Put another way, according to the teachings hereof, a proxy server can choose (e.g., at the time of a client request) the amount of data that it will fetch from origin. In the below discussion of how over-caching is controlled, the notion of control can refer to controlling the decision-making as to a threshold, binary choice of "over-cache vs. do not overcache" and/or to the determination of the degree of over-caching to apply.

Over-caching can be controlled based on cache pressure. The term cache pressure refers to a metric reflecting how full the local cache is at a point in time. If the cache pressure is high, then the cache has little free space and it may need to evict objects even before they have expired. Cache pressure can be used in a variety of ways. For example, query parameters can be expanded up to a limit imposed by current cache pressure, or some limit on table size can be applied based on cache pressure. Or, there can be a binary cache pressure/no-pressure flag that turns the expansion feature on/off

One way to measure cache pressure is the amount of available memory for caching. If there is none, or very little, available then the cache pressure is high. If there is a lot of space, the cache pressure is low. If only a few different objects are being requested from the proxy, and/or there are many expired objects (which are typically treated as 'free' space since they can be overwritten), then the cache pressure may be deemed to be low. The exact measurements and thresholds of what is high and low will depend on the actual implementation, cache replacement/eviction algorithms, cache size, rate of object requests, and like characteristics, as known in the art.

Second, over-caching can be controlled based on the inter-write times for a given database, or some relevant portion of the database. The term 'inter-write time' refers to the length of time between updates to the database, or some relevant portion of the database. The inter-write times can be observed over time; the average inter-write time can be useful to control the over-caching process because a rapidly changing table is unlikely to stay valid in cache for long enough to service many client queries. Hence, it may not be worth the cost of storage and transmission to over-cache slabs of such a table. In practice, a threshold inter-write time can be established. The threshold value will depend on operational characteristics, observations in practice and desired design/operational goals, but a possible threshold might be in the range of about 1 minute to 5 minutes. If a database, or portion thereof, exhibits inter-write times that are below the threshold (i.e., it is changing too fast), then the proxy server can de-activate the over-caching function until they rise above the threshold for some stable period of time for that table and/or portion.

To determine inter-write times, in one embodiment, the origin database can report inter-write times (or a statistical summary thereof) to the proxy server or some server in the CDN platform. In other embodiments, the proxy server can observe and track the changes in the table when it issues forward requests. Once it sees a change, it can use this as the inter-write time.

Third, over-caching can be controlled based on a recent history of queries. This technique involves the proxy server observing its own (and/or possibly another server's) queries to a given origin database over a defined period of time, e.g., a sliding window of time capturing the most recent N seconds. For example, a sliding window of time of about 5 minutes could be used. However, in some cases, particularly for popular content, this time window may be too long (unnecessarily long, leading to too many stored queries taking up too much space). Therefore, in an alternative embodiment, the last about 1000 or so queries can be kept and analyzed. At the end of the time window, the proxy server aggregates the queries by taking the union of the queries, and requests that slab from the origin database. This query aggregation process is essentially a way of implementing the expansion step previously mentioned. As an example consider the following 6 queries:
SELECT title, color FROM catalog WHERE cat = 4 ORDER BY price LIMIT 10
SELECT title, color FROM catalog ORDER BY price LIMIT 10 OFFSET 30
SELECT title, color FROM catalog ORDER BY price LIMIT 10
SELECT id, title, color FROM catalog ORDER BY color LIMIT 10
SELECT title, color FROM catalog WHERE category = "shoes"
SELECT title, color FROM catalog WHERE title = "My Product"

The union of those queries depends on the table name strategy (described above). Put another way, the virtual table names for each of these queries can be used to unionize them.

For a table name strategy (iii), which requires the most database-like logic in the proxy, all queries above are unionized into this simple slab query, as only clauses in the virtual table name construction are retained, thus only FROM is retained:
SELECT id, title, color FROM catalog

In practice, slabs may be created using LIMIT and OFFSET as described above.

For a table name strategy (ii) the 6 original queries above become the following 4 queries, because the WHERE clause is now part of the virtual table name:
SELECT id, title, color FROM catalog WHERE cat = 4
SELECT id, title, color FROM catalog
SELECT title, color FROM catalog WHERE category = "shoes"
SELECT title, color FROM catalog WHERE title = "My Product"

In practice, slabs may be created using LIMIT and OFFSET as described above. This may be done even for the WHERE clause directly matches where a single row result is expected, unless configuration optimizes it away.

For a table name strategy (i) which involves the least amount of database logic in the proxy server, the queries above are aggregated thusly:
SELECT title, color FROM catalog WHERE cat = 4 ORDER BY price
SELECT title, color FROM catalog ORDER BY price
SELECT id, title, color FROM catalog ORDER BY color
SELECT title, color FROM catalog WHERE category = "shoes"
SELECT title, color FROM catalog WHERE title = "My Product"

In practice, slabs may be created using LIMIT and OFFSET as described above, which is likely most beneficial for the versions that do not contain a WHERE clause.

### Managing Slabs in Cache

As each slab is received from the origin database, the proxy server can tag the slab with one or more tokens (also referred to as tags), in the manner described in US Patent Nos. 9,648,125; 9,807,190; 9,813,515; 9,641,640; and 10,063,652, the teachings of which are hereby incorporated by reference. This tagging enables invalidation on-demand by token. For example, in one implementation, the tagging scheme could utilize the expanded query for the slab as a token, with characters munged to fit the token syntax requirements. Another scheme can involve limiting the query type allowed and building a token by giving sub-tokens implicit meaning, e.g., <virtual table name or hash thereof >_<offset>_<limit>. This allows a token to refer to a slab. Additional variations would likely be used in an embodiment, such as a variation with the virtual table name alone; and a variation with at least the virtual table name and offset that is accrued onto every slab higher in offset (shown in examples below ending with "_plus").

For example, for table name strategy (i) and a client query of:
SELECT title, color FROM catalog ORDER BY price LIMIT 10
the following tags may be used:
FROM_catalog_ORDER-BY_price
FROM_catalog_ORDER-BY_price_0_plus
FROM_catalog_ORDER-BY_price_0_10

And for a client query of:
SELECT title, color FROM catalog ORDER BY price LIMIT 10 OFFSET 10 the following tags may be used:
FROM_catalog_ORDER-BY_price
FROM_catalog_ORDER-BY_price_0_plus
FROM_catalog_ORDER-BY_price_10_plus
FROM_catalog_ORDER-BY_price_10_10

In multi-tenant environments, the aforementioned tokens could have a particular hostname or tenant identifier added (e.g, as a prefix) to facilitate lookup. Or the tokens could be managed within the context of a request handling process that binds the caching process to a configuration for a given tenant.

### Slab Invalidation

Slabs can be invalidated on-demand, preferably as a whole. For example, upon a write event that occurs either at a proxy server or that is propagated to the CDN from origin or other source, all slabs that include the updated cell can be invalidated using the cache token (tag) purge.

When it is necessary to invalidate slabs, a purge request can use the tags described above to variously purge (a) the entire table (e.g. invalidate by tag FROM_catalog_ORDER-BY_price); (b) the slabs affected by an INSERT or DELETE query, or similar query, changing rows from a certain point onwards in a row order (e.g. invalidate by tag FROM_catalog_ORDER-BY_price_10_plus); or (c) a particular slab affected by an UPDATE query, or similar query, changing a row (e.g. invalidate by tag FROM_catalog_ORDER-BY_price_10_10).

In one embodiment, a proxy server in the CDN itself may initiate a purge request to the relevant purge subsystem (which will then propagate back to all proxy servers including the one making that request) rather than doing the same from the database server subsystem. If all INSERT, DELETE, UPDATE queries, or similar queries, are sent via a proxy server, or notified to a proxy server, this may be easier to implement.

Cache tag invalidation may employ range tokens for formal support of primary key numbering, as described in US Patent Nos. 9,648,125; 9,807,190; 9,813,515; 9,641,640; and 10,063,652. For example, as stated in US Patent No. 9,648,125: tokens may be considered to be 'range' tokens by expressing ranges of values in a specific syntactic style. A response can be tagged with range tokens that indicate, for example, a range of values to which the response relates (such as table row numbers). A subsequent invalidation of a specific value within the range of previously listed range tokens can invalidate those range tokens and the responses to which they were connected.

Applying a syntax similar to that introduced in the aforementioned patents to the current teachings, where brackets indicate ranges, a token for a slab may be of the form:
<virtual table name or hash thereof>[<offset>..<offset+limit>] e.g. : FROM_catalog_ORDER-BY_price[1..5]
to indicate that the cached slab, for the 'catalog' table ordered by 'price' field, comprises data from rows 1-5. In the above example, the table identifier is followed by a first set of brackets to indicate the range of the rows, the double-dot indicating the range between the endpoints 1 and 5.

In some embodiments, columns may also be enumerated, as such:
table[1..5][1..10]
which in this case indicates that the cached slab, for a table called 'table' comprises data from rows 1-5 and columns 1-10 in those rows, using some stable mapping of column names to column numbers. As before, the table identifier is followed by a first set of brackets to indicate the range of the rows, the double-dot indicating the range between the endpoints 1 and 5. Now, the second set of brackets indicates the columns in those rows in similar syntax.

A subsequent receipt by the proxy server of an invalidation with respect to following token:
table[2][3]
would cause the proxy server to invalidate the slab, because the token refers to a cell within the slab (row 2, column 3), and the invalidation means that the cell is no longer valid (e.g., due to an update).

A proxy server can then re-request the slab from origin (e.g., right away, or upon receiving a subsequent client request). Alternatively, a new slab can be pushed through the system (e.g, via a publish/subscribe system) from origin (or its associated database service) to proxy server.

The initiation of the invalidation or push may occur at the proxy server receiving the write event or from the origin database.

Further, a proxy server that receives a write event to a given cell may update its own local copy of a slab that includes that cell with the updated cell for a brief period of time until the slab is invalidated or updated from the data store subsystem. This local updating can serve to provide consistency to the client who just authored a change. The local cache is also tasked with resolving the common question of simultaneous conflicting updates -- thus, proxy servers patching their own local update will have it overwritten by an authoritative consistency-enforcing value in a short time period.

### Partial Slab Invalidation

In some embodiments, it is possible to manage cached slabs on a fine-grained basis, such that individual portions of the slab (e.g., individual rows or columns or cells) can be invalidated without invalidating the entire slab. This increases complexity of cache management, although it also offers the possibility of reusing portions of slabs that are still valid to service later client requests.

For example, continuing with the slab introduced above:
table[1..5][1..10]
and the invalidation of:
table[2][3]

The proxy server, upon receiving the invalidation, could mark only row 2 as invalid. It could do this by invalidating the original slab, breaking the slab into two sub-slabs (without the now-invalid row) and re-caching (or re-indexing) those sub-slabs with their own tokens:
table.1[1..1][1..10]
table.2[3..5][1..10]

In the future, of course, given a request associated to the table, the proxy server would need to evaluate both sub-slabs to see if there was a cache hit.

Another possibility is to leave the slab intact, but annotate the entry with the invalidation; this requires the proxy cache to take extra steps to determine if a cached slab is a "hit", as it must evaluate the hit and then determine if the invalid portion of the table were necessary to the cache hit. An example tactic is to include a binary header on the slab in cache where one bit (i.e., one bit of a byte) serves as a flag to indicate if the table has been affected by a purge event, and a further one bit per row follows to indicate if that row of the table has been affected by a purge event; thus providing a relatively compact indication of which rows are "damaged" by purge.

For functionality similar to providing tokens denoting "offset x plus" as introduced above, a range token system may entertain tokens that have an 'infinity' bound on the upper range element, thus allowing them to represent an invalidation target for an offset and all higher rows (e.g., invalidating table[14+] invalidates table[11...20] and table[20...30]). Alternatively,the range token system may used fixed ranges in the tokens attached to content and entertain invalidation requests that specify a numeric point inside ranges, and also all ranges starting higher than the given numeric point, thus allowing fewer tokens since the content will be tagged more simply and the invalidation logic will be slightly smarter.

### Time to Live (TTL) Values on Rows

Some database servers may return TTL annotations per-row to describe a time-to-live that is separate from all other rows. In this case, if a client requests a query that contains a row that has expired per its TTL, the slab should be refreshed or ignored.

The entire slab can be considered to have a TTL equal to the minimum TTL of any row within it, for the purposes of asynchronously refreshing the whole slab if it is nearly-expiring and 'hot'; i.e. results have been served from it recently.

### Formatting of the Origin Response to the Database Query

A data set returned from the database in response to a query often needs to be transformed by the proxy into a suitable format, such as a JSON object, CSV, or otherwise, before returning it to the client. To accomplish this, multiple rows can be represented using a JSON array, multiple columns (or attributes) in a row can be represented as a collection of name / value pairs.

### Database Types

The teachings hereof apply to a wide variety of databases. Many examples above have used a tabular format, but this is not a limitation. For example, if records were stored in a tree or directed graph, the teachings hereof can be applied to this kind of database simply by modifying the mechanics of the expansion step.

For example, instead of expanding the parameters of a SQL or SQL-like query for a table, for a tree or graph, a query directive that normally retrieves a particular node in a tree or graph can be expanded to retrieve all nodes within a given distance N of the target node. These and other modifications are within scope of the teachings hereof.

GraphQL is another type of database to which the teachings hereof can be applied. GraphQL is a known technology that allows graph queries to an endpoint that uses and publishes a schema of available data. GraphQL has node names written into queries that can be given similar treatment as SELECT fields in SQL (e.g. they may be treated as column names as described above); and nodes that return arrays of data (usually in JSON) which can be given similar treatment as SQL rows (e.g. they may be over-cached using slabs as described above). In contrast to SQL, a single GraphQL query may have multiple array results -- each should be treated. Pagination is non-standard and varied in GraphQL, unlike SQL, so pagination handling will vary based on the approach used by that GraphQL implementation, but example approaches approaches include (a) custom parameters on a node that mimic LIMIT and OFFSET; (b) custom parameters on a node that mimic LIMIT and use an identifier or value as an 'after' designator, that is, to indicate which value after which the next results should be fetched; (c) a cursor-based system where custom parameters on a node mimic LIMIT and use an identifier to provide an 'after' value that matches a cursor value.

One straightforward way to over-cache in all cases is to fetch the entire node without parameters that paginate (assuming the schema permits it), and using the entire result as a slab. Alternatively, in the case of (a), the LIMIT-like parameter and the OFFSET-like parameter may be adjusted for the purpose of making a slab as in SQL above. In the case of (b) or (c), the LIMIT-like parameter may be adjusted for the purpose of making a slab as in SQL above, but the offset requires knowledge of prior results, thus a starting slab may begin from the first page where an offset is unnecessary, and then slabs may be built by progressively utilizing the last value or cursor given in one slab to request the next; requests may then be fulfilled from the slabs by scanning for the OFFSET-like parameter (which may use a built index, per slab or across slabs, for speed) to find the offset.

### Computer Based Implementation

The teachings hereof may be implemented using conventional computer systems, but modified by the teachings hereof, with the components and/or functional characteristics described above realized in special-purpose hardware, general-purpose hardware configured by software stored therein for special purposes, or a combination thereof, as modified by the teachings hereof.

Software may include one or several discrete programs. Any given function may comprise part of any given module, process, execution thread, or other such programming construct. Generalizing, each function described above may be implemented as computer code, namely, as a set of computer instructions, executable in one or more microprocessors to provide a special purpose machine. The code may be executed using an apparatus - such as a microprocessor in a computer, digital data processing device, or other computing apparatus - as modified by the teachings hereof. In one embodiment, such software may be implemented in a programming language that runs in conjunction with a proxy on a standard Intel hardware platform running an operating system such as Linux. The functionality may be built into the proxy code, or it may be executed as an adjunct to that code.

While in some cases above a particular order of operations performed by certain embodiments is set forth, it should be understood that such order is exemplary and that they may be performed in a different order, combined, or the like. Moreover, some of the functions may be combined or shared in given instructions, program sequences, code portions, and the like. References in the specification to a given embodiment indicate that the embodiment described may include a particular feature, structure, or characteristic, but every embodiment may not necessarily include the particular feature, structure, or characteristic.

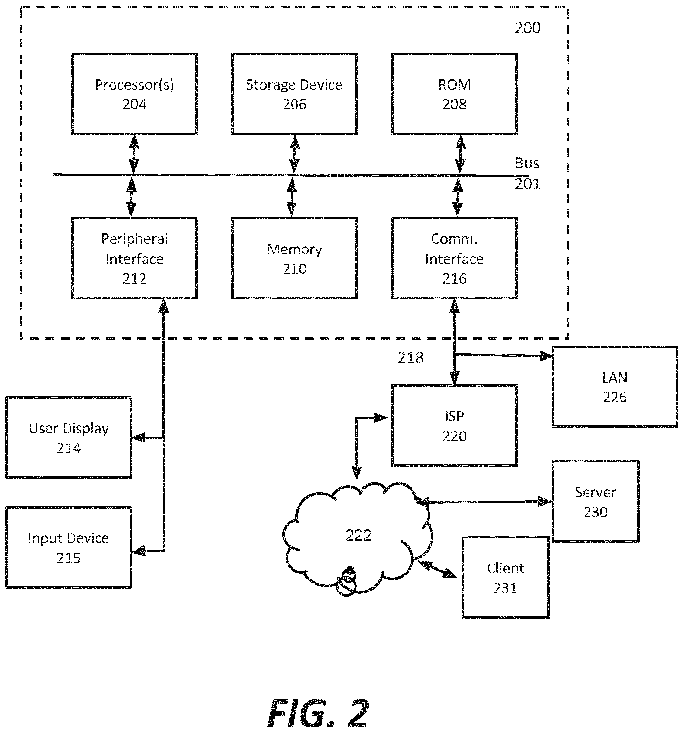

FIG. 2 is a block diagram that illustrates hardware in a computer system 200 upon which such software may run in order to implement embodiments of the invention. The computer system 200 may be embodied in a client device, server, personal computer, workstation, tablet computer, mobile or wireless device such as a smartphone, network device, router, hub, gateway, or other device. Representative machines on which the subject matter herein is provided may be a computer running a Linux or Linux-variant operating system and one or more applications to carry out the described functionality.

Computer system 200 includes a microprocessor 204 coupled to bus 201. In some systems, multiple processor and/or processor cores may be employed. Computer system 200 further includes a main memory 210, such as a random access memory (RAM) or other storage device, coupled to the bus 201 for storing information and instructions to be executed by processor 204. A read only memory (ROM) 208 is coupled to the bus 201 for storing information and instructions for processor 204. A non-volatile storage device 206, such as a magnetic disk, solid state memory (e.g., flash memory), or optical disk, is provided and coupled to bus 201 for storing information and instructions. Other application-specific integrated circuits (ASICs), field programmable gate arrays (FPGAs) or circuitry may be included in the computer system 200 to perform functions described herein.

A peripheral interface 212 may be provided to communicatively couple computer system 200 to a user display 214 that displays the output of software executing on the computer system, and an input device 215 (e.g., a keyboard, mouse, trackpad, touchscreen) that communicates user input and instructions to the computer system 200. However, in many embodiments, a computer system 200 may not have a user interface beyond a network port, e.g., in the case of a server in a rack. The peripheral interface 212 may include interface circuitry, control and/or level-shifting logic for local buses such as RS-485, Universal Serial Bus (USB), IEEE 1394, or other communication links.

Computer system 200 is coupled to a communication interface 216 that provides a link (e.g., at a physical layer, data link layer,) between the system bus 201 and an external communication link. The communication interface 216 provides a network link 218. The communication interface 216 may represent an Ethernet or other network interface card (NIC), a wireless interface, modem, an optical interface, or other kind of input/output interface.

Network link 218 provides data communication through one or more networks to other devices. Such devices include other computer systems that are part of a local area network (LAN) 226. Furthermore, the network link 218 provides a link, via an internet service provider (ISP) 220, to the Internet 222. In turn, the Internet 222 may provide a link to other computing systems such as a remote server 230 and/or a remote client 231. Network link 218 and such networks may transmit data using packet-switched, circuit-switched, or other data-transmission approaches.

In operation, the computer system 200 may implement the functionality described herein as a result of the processor executing code. Such code may be read from or stored on a non-transitory computer-readable medium, such as memory 210, ROM 208, or storage device 206. Other forms of non-transitory computer-readable media include disks, tapes, magnetic media, SSD, CD-ROMs, optical media, RAM, PROM, EPROM, and EEPROM, flash memory. Any other non-transitory computer-readable medium may be employed. Executing code may also be read from network link 218 (e.g., following storage in an interface buffer, local memory, or other circuitry).

It should be understood that the foregoing has presented certain embodiments of the invention but they should not be construed as limiting. For example, certain language, syntax, and instructions have been presented above for illustrative purposes, and they should not be construed as limiting. It is contemplated that those skilled in the art will recognize other possible implementations in view of this disclosure and in accordance with its scope and spirit. The appended claims define the subject matter for which protection is sought.

It is noted that any trademarks appearing herein are the property of their respective owners and used for identification and descriptive purposes only, and not to imply endorsement or affiliation in any way.

## Claims

1. A method for caching data from a database at a proxy server, the method comprising:
executing an over-caching function for a cache of a proxy server, the proxy server deployed in a wide area network and receiving client requests from a plurality of clients, the over-caching function comprising:
in response to a client request that causes the proxy server to need to send a first database query to a database associated with an origin infrastructure remote from the proxy server, and based on evaluation of one more past database queries to the database, expanding the database query to create a second database query that requests more data from the database than the first database query and more data than is necessary to respond to the client request;
sending the second database query to the remote database instead of the first database query;
receiving a response to the second database query;
extracting a subset of data from the response to serve the client request;
caching the full set of data from the response in the cache, for use in serving subsequent client requests.

2. The method of claim 1, wherein the one or more past database queries to the database are database queries collected over a defined time period before the client request.

3. The method of claim 1, wherein the one or more past database queries to the database are a configured number of database queries observed and stored by the proxy server before the client request.

4. The method of claim 1, wherein the evaluation of the one or more past database queries comprises aggregating the one or more past database queries to create the expanded query.

5. The method of claim 1, wherein the client request is for any of: a web page, web application, and web API.

6. An apparatus for caching data from a database for a proxy server, the apparatus comprising a proxy server having circuitry forming one or more processors and memory storing computer program instructions that when executed on the one or more processors cause the proxy server to:
execute an over-caching function for a cache of a proxy server, the proxy server deployed in a wide area network and receiving client requests from a plurality of clients, the over-caching function comprising:
in response to a client request that causes the proxy server to need to send a first database query to a database associated with an origin infrastructure remote from the proxy server, and based on evaluation of one or more past database queries to the database, expanding the database query to create a second database query that requests more data from the database than the first database query and more data than is necessary to respond to the client request;
sending the second database query to the remote database instead of the first database query;
receiving a response to the second database query;
extracting a subset of data from the response to serve the client request;
caching the full set of data from the response in the cache, for use in serving subsequent client requests.

7. A method for caching database records in connection with a proxy server operation, the method comprising, at one or more servers:
receiving a content request from a client via a computer network;
associating the content request with an origin infrastructure associated with a database, the origin infrastructure being remote from the one or more servers;
determining, based at least in part on the content request, that one or more database records from the database are necessary to respond to the content request;
generating a database query to fetch the one or more database records from the database;
based on evaluation of one or more past database queries to the database, determining to expand the database query, and upon said determination, expanding the database query, to create an expanded database query, so as to fetch the one or more database records that are necessary to respond to the content request and one or more records that are unnecessary to respond to the content request;
sending the expanded database query to the origin infrastructure;
receiving a response to the expanded database query from the origin infrastructure;
extracting the one or more necessary database records from the response, generating a response to the content request of the client based at least in part thereon, and sending said response to the client;
caching the response, including both the necessary and unnecessary database records, in a local cache associated with the one or more servers.

8. The method of claim 7, wherein the content request comprises an explicit database query, and said generation of the database query, prior to expanding, comprises any of extracting and reformatting said explicit database query from the content request.

9. The method of claim 7, wherein the one or more past database queries to the database are database queries collected over a defined time period before the client request. wherein the one or more conditions comprises: any of: cache pressure on the cache, inter-write times associated with the database, and observed database queries over a defined time period.

10. The method of claim 7, wherein the one or more past database queries to the database are a configured number of database queries observed and stored by the proxy server before the client request.

11. The method of claim 7, wherein the evaluation of the one or more past database queries comprises aggregating the one or more past database queries to create the expanded query.

12. The method of claim 7, wherein the expansion of the database query is performed at least in part by any of: increasing a limit, selecting more rows, selecting more columns, and relaxing a feature of the database query.

13. The method of claim 7, wherein the database comprises any of: a SQL, no-SQL database, relational database, key-value store.

14. The method of claim 7, wherein the one or more necessary and unnecessary database records comprise any of: a table row, a table column, a table cell, a value associated with a key, a node in a data structure.

15. The method of claim 7, wherein the content request is for any of a web page, web application, and web API.

16. A system for caching database records in connection with a proxy server operation, the system comprising one or more servers having circuitry forming one or more processors and memory storing computer program instructions that when executed on the one or more processors cause the one or more servers to:
receive a content request from a client via a computer network;
associate the content request with an origin infrastructure associated with a database, the origin infrastructure being remote from the one or more servers;
determine, based at least in part on the content request, that one or more database records from the database are necessary to respond to the content request;
generate a database query to fetch the one or more database records from the database;
based on evaluation of one or more past database queries to the database, determine to expand the database query, and upon said determination, expanding the database query, to create an expanded database query, so as to fetch the one or more database records that are necessary to respond to the content request and one or more records that are unnecessary to respond to the content request;
send the expanded database query to the origin infrastructure;
receive a response to the expanded database query from the origin infrastructure;
extract the one or more necessary database records from the response, generating a response to the content request of the client based at least in part thereon, and sending said response to the client;
cache the response, including both the necessary and unnecessary database records, in a local cache associated with the one or more servers.
